# EUROPEAN PATENT APPLICATION

(11) **EP 4 574 567 A1**
(43) Date of publication of application: **25.06.2025**
(21) Application number: 23217708.9
(22) Date of filing: 18.12.2023
(51) Int. Cl.: B60P 1/16, F15B 19/00

(54) **METHOD AND SYSTEM FOR CONDITION MONITORING OF MINING VEHICLE**

(71) Applicant: Sandvik Mining and Construction Oy, 33330 Tampere (FI)
(72) Inventor: Aaltonen, Seppo, 33311 Tampere (FI); Syrjänen, Juha, 33311 Tampere (FI); Kittilä, Veli-Matti, 33311 Tampere (FI); Lehtonen, Jarkko, 33311 Tampere (FI)
(74) Representative: Sandvik

(57) **Abstract**

A method for condition monitoring of a mining vehicle. The method comprises controlling a hydraulic circuit to pressurize a lifting cylinder for changing a position of a dump box relative to a body of the mining vehicle, controlling a respective pressure release valve to open the hydraulic circuit for depressurizing the lifting cylinder, measuring a loading applied by the dump box to the body of the mining vehicle both in response to changing the position of the dump box relative to the body of the mining vehicle and in response to control the pressure release valve to open the hydraulic circuit, and determining, based on the said loading measurements, a state of the pressure release valve in response to control the pressure release valve to open the hydraulic circuit for depressurizing the lifting cylinder.

Additionally, a system for condition monitoring of the mining vehicle.

## Description

### TECHNICAL FIELD

The invention relates to a method and system for condition monitoring of a mining vehicle.

### BACKGROUND

Mining vehicles provided with a dump box are generally used for transporting heavy loads, such as rock or soil. The mining vehicles of this kind comprise generally a body, a dump box to be supported to the body, at least one dump box lifting cylinder for operating the dump box and an operating circuit comprising a hydraulic circuit for operating the at least one lifting cylinder.

Pressurized dump box lifting cylinders either raise the dump box upwards or lower the dump box downwards towards the body. The pressured lifting cylinder causes needless stress to the body of the mining vehicle if the hydraulic circuit needlessly has pressure on. Therefore, at least extremely heavy mining vehicles, such as dump trucks or other trucks used in mining and excavation sites typically comprise also pressure release valves for depressurizing the at least one lifting cylinder, i.e., for releasing the pressure from the at least one lifting cylinder, thereby relieving tension caused by the pressurized lifting cylinder to the vehicle body.

However, presently there is no easy procedure to check if the pressure release valves are functional. If the pressure release valves are suspected to be stuck, a specific maintenance procedure is initiated. The maintenance procedure requires a separate installation of pressure sensors at specific spots in the hydraulic circuit of the lifting cylinders, pressurizing the lifting cylinders for moving the dump box relative to the body of the mining vehicle and thereafter depressurizing the lifting cylinders for allowing the dump box to return to its original position relative to the body of the mining vehicle. The pressures prevailing in the hydraulic circuit both in response to the pressurizing and depressurizing the lifting cylinders are measured by the said pressure sensors. This maintenance procedure is repeated for all the pressure release valves connected to the lifting cylinders. This present maintenance procedure is thus quite complicated and time consuming, requiring a separate installation of specific pressure measuring devices into the hydraulic circuit of the lifting cylinders and a working time of about half an hour of two persons.

Therefore, there is a need for more efficient maintenance procedure to verify that the pressure release valves of the lifting cylinders are functional.

### SUMMARY

The present application relates generally to providing a new method and a new system for condition monitoring of a mining vehicle.

The method relates to a condition monitoring of a mining vehicle, which mining vehicle comprises a body, a dump box, at least one dump box lifting cylinder for operating the dump box, a hydraulic circuit for operating the lifting cylinder, and a pressure release valve for the hydraulic circuit for depressurizing the lifting cylinder. The method comprises controlling a hydraulic circuit to pressurize the lifting cylinder for changing a position of the dump box relative to the body, controlling a respective pressure release valve to open the hydraulic circuit for depressurizing the lifting cylinder, measuring a loading applied by the dump box to the body of the mining vehicle both in response to changing the position of the dump box relative to the body of the mining vehicle and in response to control the pressure release valve to open the hydraulic circuit for depressurizing the lifting cylinder, and determining, based on the said loading measurements, a state of the pressure release valve in response to control the pressure release valve to open the hydraulic circuit for depressurizing the lifting cylinder.

The system also relates to a condition monitoring of a mining vehicle, which mining vehicle comprises a body, a dump box, at least one dump box lifting cylinder for operating the dump box, a hydraulic circuit for operating the lifting cylinder, and a pressure release valve for the hydraulic circuit for depressurizing the lifting cylinder. The system comprises at least one loading measurement element for measuring a loading applied by the dump box to the body of the mining vehicle, and a control unit configured to receive loading measurements from the at least one loading measurement element and to control the operation of the lifting cylinder for operating the dump box, wherein the control unit is configured to control a hydraulic circuit to pressurize the lifting cylinder for changing a position of the dump box relative to the body, to control a respective pressure release valve to open the hydraulic circuit for depressurizing the lifting cylinder, to receive loading measurements of a loading applied by the dump box to the body of the mining vehicle both in response to changing the position of the dump box relative to the body of the mining vehicle and in response to control the pressure release valve to open the hydraulic circuit for depressurizing the lifting cylinder, and to determine, based on the said loading measurements, a state of the pressure release valve in response to control the pressure release valve to open the hydraulic circuit for depressurizing the lifting cylinder.

More specifically, the present application is based on the idea of monitoring a correct functioning of the at least one pressure release valve to release the pressure in the at least one lifting cylinder of the dump box. The at least one lifting cylinder is pressurized for moving the dump box away from the body of the mining vehicle and/or against the body of the mining vehicle and the at least one lifting cylinder is depressurized for allowing the dump box to rest freely against the body of the mining vehicle. The loadings applied by the dump box to the body of the mining vehicle are measured in response to the said operations.

One of the advantages of the present application is that it provides a simple and easily implementable solution for monitoring the condition of the mining vehicle as far it considers a correct functioning of the at least one pressure release valve for releasing the pressure in the at least one lifting cylinder of the dump box. Thereby a possible malfunction of the pressure release valve may be detected easily. The disclosed testing procedure may be carried out during a normal operation of the mining vehicle without any maintenance personnel and equipment external to the mining vehicle.

### BRIEF DESCRIPTION OF THE DRAWINGS

In the following the present application will be described in greater detail by means of example embodiments with reference to the accompanying drawings, in which
Figure 1 shows schematically a side view of a mining vehicle;
Figure 2 shows schematically a system for monitoring a condition of a pressure release valve in a mining vehicle;
Figure 3 shows schematically a method for monitoring a condition of a pressure release valve in a mining vehicle;
Figure 4 shows schematically and partially a system for carrying out the method of Figure 3;
Figures 5, 6a and 6b show schematically a method for monitoring a condition of pressure release valves in a mining vehicle, and
Figure 7 shows schematically and partially a system for carrying out the method of Figures 5, 6a and 6b.

For the sake of clarity, the figures show some example embodiments of the present application in a simplified manner. Like reference numerals identify like elements in the figures.

### DETAILED DESCRIPTION

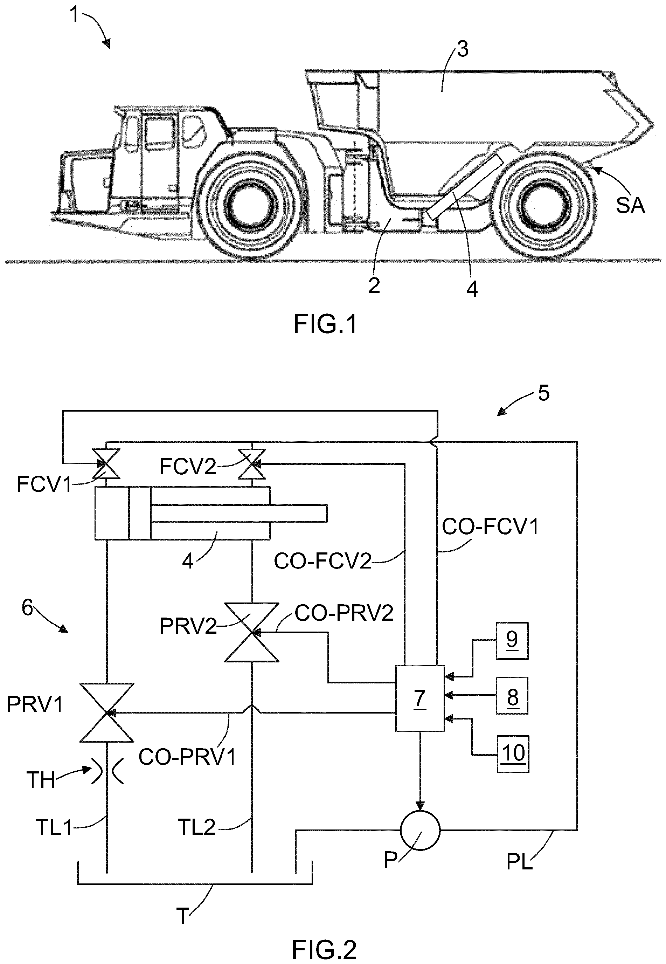

Figure 1 is a schematic side view of a mining vehicle 1, wherein the solution described herein may be utilized. The mining vehicle 1 comprises a body 2, which may also be called a frame 2, and a dump box 3, i.e., a tipping platform, supported to the body 2. The mining vehicle 1 further comprises at least one dump box lifting cylinder 4 for operating the dump box 3, i.e., for raising the dump box 3 upwards for tilting the dump box 3 about a swivelling axis SA for unloading a load carried by the dump box 3, and for lowering the dump box 3 back downwards for resting against the body 2. The mining vehicle 1 of Figure 1 comprises two lifting cylinders 4, i.e., one lifting cylinder 4 on the visible side of the mining vehicle 1, and one lifting cylinder 4 on the opposite invisible side of the mining vehicle 1. However, instead of two lifting cylinders 4, the mining vehicle 1 may comprise any applicable number of the lifting cylinders 4. Therefore, the mining vehicle may for example comprise only one lifting cylinder 4 that can be accommodated for example below the dump box 3 at a central part thereof.

The mining vehicle 1 of Figure 1 is a dump truck that can be used in a mine, a quarry, or an excavation site, for instance, for transporting extremely heavy loads, such as blasted rock, rock material or soil from a loading site to an unloading site. In addition to the dump trucks of Figure 1, the solution described herein may be used in other mining vehicles or other transport vehicles comprising a dump box or a loading platform being a form of a tipping platform.

The mining vehicle 1 further comprises an arrangement 5 for operating the at least one lifting cylinder 4. The arrangement 5 comprises a hydraulic circuit 6 and a control unit 7 intended to control operations of components in the hydraulic circuit 6. An example embodiment of the arrangement 5 with a single lifting cylinder 4 is shown schematically in Figure 2. If there are two or more lifting cylinders 4 in a mining vehicle, other example embodiments of an arrangement 5 for operating the two or more lifting cylinders 4 may be implemented by duplicating necessary components in the hydraulic circuit. The control unit 7 may be a control unit configured to control only the operation of the hydraulic circuit 6 for operating the dump box 3. Alternatively, the control unit 7 may be a control unit configured to operate also other operations in the mining vehicle 1. The control unit 7 can for example be a computer or some other device or means comprising a microprocessor or a microcontroller which is configured to execute a software program for carrying out pre-designed operations for operating the hydraulic circuit 6 for implementing a method and a system for monitoring a condition of the mining vehicle 1 as disclosed herein.

The hydraulic circuit 6 of Figure 2 comprises a tank T for forming a reservoir for preserving a hydraulic pressure fluid used to operate the lifting cylinder 4. The hydraulic circuit 6 further comprises a pressure line PL comprising a pump P for supplying pressurized pressure fluid flow to the lifting cylinder 4, i.e., for pressurizing the lifting cylinder 4. The operation of the pump P is controlled by the control unit 7 through the respective control connection CO-P. The pressurized pressure fluid flow to the lifting cylinder 4 is directed either to a piston side of the lifting cylinder 4 through a respective first flow control valve FCV1 or to a piston rod side of the lifting cylinder 4 through a respective second flow control valve FCV2, as controlled by the control unit 7 through respective control connections CO-FCV1 and CO-FCV2. For operating the dump box 3, for example the piston side of the lifting cylinder 4 may be pressurized for moving the dump box 3 upwards, whereby the piston rod side of the lifting cylinder 4 will be pressurized for moving the dump box 3 downwards. That selection could, however, also be opposite.

The hydraulic circuit 6 further comprises, for the lifting cylinder 4, a first tank line TL1 connected to the piston side of the lifting cylinder 4. The first tank line TL1 is provided with a first pressure release valve PRV1 for depressurizing the piston side of the lifting cylinder 4, i.e., for releasing the pressure in the piston side of the lifting cylinder 4 when controlled accordingly by the control unit 7 through the respective control connection CO-PRV1. The pressure line PL with the pump P therein, together with the first tank line TL1 comprising the first pressure release valve PRV1 are arranged to operate the piston side of the lifting cylinder 4.

Further the hydraulic circuit 6 comprises, for the lifting cylinder 4, a second tank line TL2 connected to the piston rod side of the lifting cylinder 4. The second tank line TL2 is provided with a second pressure release valve PRV2 for depressurizing the piston rod side of the lifting cylinder 4, i.e., for releasing the pressure in the piston rod side of the lifting cylinder 4 when controlled accordingly by the control unit 7 through the respective control connection CO-PRV2. The pressure line PL with the pump P therein, together with the second tank line TL2 comprising the second pressure release valve PRV2 are arranged to operate the piston rod side of the lifting cylinder 4.

The hydraulic circuit 6 may also comprise a throttle valve in one or both tank lines to throttle the flow of the pressure fluid to the tank T. Just as an example, a throttle TH is shown in Figure 2 in the first tank line TL1.

Regarding to a method for condition monitoring of a mining vehicle, which mining vehicle comprises a body, a dump box, at least one dump box lifting cylinder for operating the dump box, a hydraulic circuit for operating the lifting cylinder, and a pressure release valve for the hydraulic circuit for depressurizing the lifting cylinder, the method comprises controlling a hydraulic circuit to pressurize the lifting cylinder for changing a position of the dump box relative to the body, controlling a respective pressure release valve to open the hydraulic circuit for depressurizing the lifting cylinder, measuring a loading applied by the dump box to the body of the mining vehicle both in response to changing the position of the dump box relative to the body of the mining vehicle and in response to control the pressure release valve to open the hydraulic circuit for depressurizing the lifting cylinder, and determining, based on the said loading measurements, a state of the pressure release valve in response to control the pressure release valve to open the hydraulic circuit for depressurizing the lifting cylinder.

Regarding to a system for condition monitoring of a mining vehicle, which mining vehicle comprises a body, a dump box, at least one dump box lifting cylinder for operating the dump box, a hydraulic circuit for operating the lifting cylinder, and a pressure release valve for the hydraulic circuit for depressurizing the lifting cylinder, the system comprises at least one loading measurement element for measuring a loading applied by the dump box to the body of the mining vehicle, and a control unit configured to receive loading measurements from the at least one loading measurement element and to control the operation of the lifting cylinder for operating the dump box, wherein the control unit is configured to control a hydraulic circuit to pressurize the lifting cylinder for changing a position of the dump box relative to the body, to control a respective pressure release valve to open the hydraulic circuit for depressurizing the lifting cylinder, to receive loading measurements of a loading applied by the dump box to the body of the mining vehicle both in response to changing the position of the dump box relative to the body of the mining vehicle and in response to control the pressure release valve to open the hydraulic circuit for depressurizing the lifting cylinder, and to determine, based on the said loading measurements, a state of the pressure release valve in response to control the pressure release valve to open the hydraulic circuit for depressurizing the lifting cylinder.

More specifically, the present application is based on the idea of monitoring a correct functioning of the at least one pressure release valve to release the pressure in the at least one lifting cylinder of the dump box. The at least one lifting cylinder is pressurized for moving the dump box away from the body of the mining vehicle and/or against the body of the mining vehicle and the at least one lifting cylinder is depressurized for allowing the dump box to rest freely against the body of the mining vehicle. The loadings applied by the dump box to the body of the mining vehicle are measured in response to the said operations.

Referring to the example embodiment of Figure 2, the disclosed method and system for condition monitoring of the mining vehicle is intended to test a functioning of at least one of the first and the second pressure release valves PRV1, PRV2.

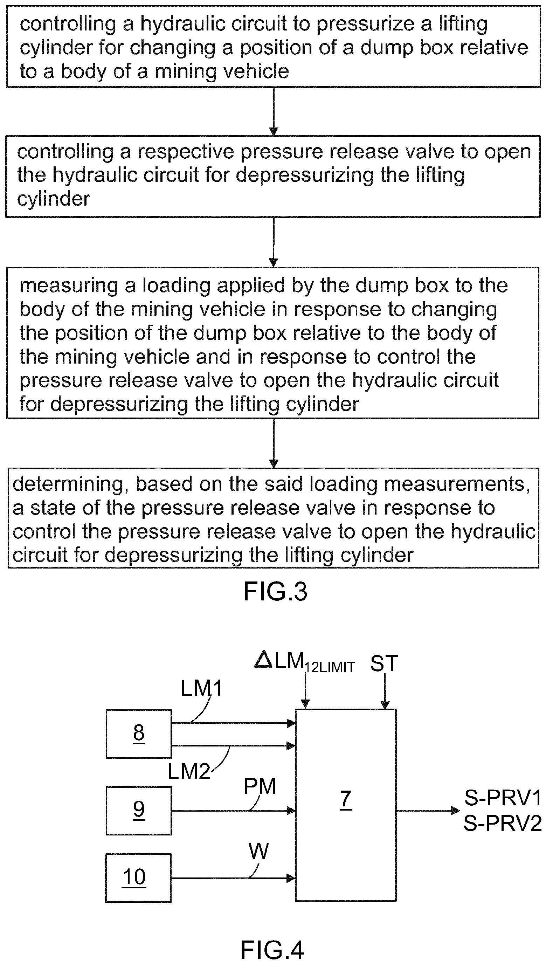

Figure 3 discloses schematically a method for testing the functioning of at least one pressure release valve PRV1, PRV2. The respective system for testing a functioning of the at least one pressure release valve PRV1, PRV2 is also shown in Figure 2, wherein Figure 2 further discloses a loading measurement element 8 for measuring a loading applied by the dump box 3 to the body 2 of the mining vehicle 1. The minimum number of the loading measurement elements 8 required is one. In some example embodiments the number of the loading measurement elements 8 may also be higher than one, whereby the loading applied by the dump box 3 to the body 2 of the mining vehicle 1 is some combination of the individual measurements of the two or more loading measurement elements 8 applied. The loading measurement element(s) 8 is(are) placed in the mining vehicle 1 at a position, wherein the dump box 3 subjects, either directly or indirectly, a loading to the loading measurement element 8 when the dump box 3 is down against the body 2 of the mining vehicle 1. The loading measurement element 8 may for example comprise a strain gauge or other device for measuring the loading applied by the dump box 3 to the body 2 of the mining vehicle 1.

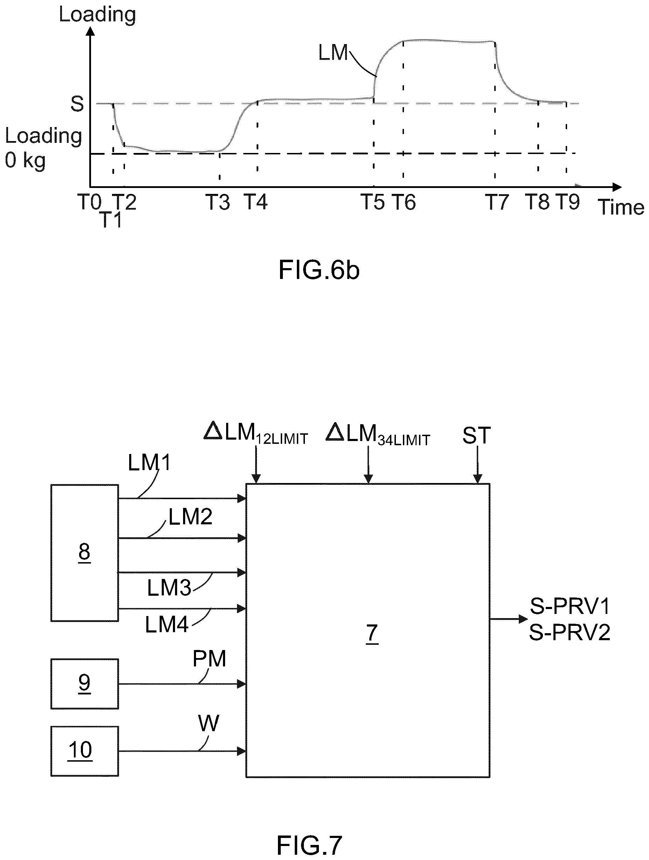

The example embodiment of Figure 2, as well as the example embodiments of Figures 4 and 7 also disclose a position measurement element 9 for indicating a position of the dump box 3 relative to the body 2 of the mining vehicle 1, and an arrangement 10 for determining a weight W of load in the dump box 3 of the mining vehicle 1. The position measurement element 9 and the arrangement 10 for determining the weight W of load are not part of a basic solution for the condition monitoring disclosed herein, but they may be applied in some example embodiments.

The method of Figure 3 comprises controlling a hydraulic circuit to pressurize the lifting cylinder 4 for changing a position of the dump box 3 relative to the body 2 of the mining vehicle 2. After that, a respective pressure release valve PRV1, PRV2 is controlled to open the hydraulic circuit 6 for depressurizing the lifting cylinder 4. A loading applied by the dump box 3 to the body 2 of the mining vehicle 1 is measured both in response to changing the position of the dump box 3 relative to the body 2 of the mining vehicle 1 and in response to control the pressure release valve PRV1, PRV2 to open the hydraulic circuit 6 for depressurizing the lifting cylinder 4. Based on the said loading measurements, a state of the pressure release valve PRV1, PRV2 is determined in response to control the pressure release valve PRV1, PRV2 to open the hydraulic circuit 6 for depressurizing the lifting cylinder 4.

In the method of Figure 3, either the piston side of the lifting cylinder 4 or the piston rod side of the lifting cylinder 4 is pressurized by a respective hydraulic circuit of the lifting cylinder 3. Thereby, the dump box 3 is either raised upwards away from the body 2 of the mining vehicle 1 or especially pulled, i.e., forced, downwards against the body 2 of the mining vehicle 1. In a starting position of the dump box 3 the dump box 3 rests freely against the body 2 of the mining vehicle 1.

If the dump box 3 is raised upwards away from the body 2 of the mining vehicle 1, the loading applied by the dump box 3 to the body 2 of the mining vehicle 1, as indicated by the loading measurement element 8, decreases. If the dump box 3 is especially pulled downwards against the body 2 of the mining vehicle 1, the loading applied by the dump box 3 to the body 2 of the mining vehicle 1, as indicated by the loading measurement element 8, increases.

If the dump box 3 has been raised upwards away from the body 2 of the mining vehicle 1, the control of the respective pressure release valve, that being either the first pressure release valve PRV1 or the second pressure release valve PRV2, to open the hydraulic circuit 6 for depressurizing the lifting cylinder 4 causes the dump box 3 to move downwards towards the body 2 of the mining vehicle 1. If the respective pressure release valve operates correctly, the dump box 3 will move in a certain time downwards against the body 2 of the mining vehicle 1 for resting freely against the body 2 of the mining vehicle 1.In this case, a respective loading measurement measured by the loading measurement element 8 should substantially correspond to the loading applied by the dump 3 to the body 2 of the mining vehicle 1 before starting the disclosed testing procedure. This indicates that the respective pressure release valve operates correctly. If the respective pressure release valve does not operate correctly, the dump box 3 will not move in a certain time downwards against the body 2 of the mining vehicle 1 for resting freely against the body 2 of the mining vehicle 1. In that case, a respective loading measurement measured by the loading measurement element 8 will not substantially correspond to the loading applied by the dump 3 to the body 2 of the mining vehicle 1 before starting the disclosed testing procedure. That indicates a malfunction of the respective pressure release valve.

Referring to example embodiments in Figures 2, 3 and 4, the disclosed testing procedure is controlled by the control unit 7. The loading measurements are also received and analysed by the control unit 7 for determining the state S-PRV1, S-PRV2 of the respective pressure release valve PRV1, PRV2. The state S-PRV1, S-PRV2 of the respective pressure release valve PRV1, PRV2 is determined after controlling the respective pressure release valve PRV1, PRV2 to open the hydraulic circuit 6 for depressurizing the lifting cylinder 4. The state S-PRV1, S-PRV2 of the pressure release valve PRV1, PRV2 may thus be considered to indicate a degree of opening of the pressure release valve PRV1, PRV2 in response to control the respective pressure release valve PRV1, PRV2 to open the hydraulic circuit 6 for depressurizing the lifting cylinder 4. In case of the pressure release valve PRV1, PRV2 not operating correctly, the degree of the opening of the pressure release valve PRV1, PRV2 does not allow the dump box 3 to move in a certain time against the body 2 of the mining vehicle such that the dump box 3 rests freely against the body 2 of the mining vehicle 1. That can be identified by the respective loading measurements provided by the loading measurement element 8.

According to an example embodiment, referring to Figures 2, 3 and 4, the loading measurement element 8 and loading measurements measured by the loading measurement element 8 are shown in Figure 4. Figure 4 shows a first loading measurement LM1 representing a loading applied by the dump box 3 to the body 2 of the mining vehicle 1 in response to changing the position of the dump box 3 relative to the body 2 of the mining vehicle, and a second loading measurement LM2 representing a loading applied by the dump box 3 to the body 2 of the mining vehicle 1 in response to control the pressure release valve to open the hydraulic circuit 6 for depressurizing the lifting cylinder 4. A difference LM2 - LM1 between the first LM1 and second LM2 loading measurements is determined, and the difference ΔLM₁₂ = LM2 - LM1 is compared to a limit value ΔLM_{12LIMIT} set for the loading difference for determining the state of the pressure release valve.

In this example embodiment, the difference LM2 - LM1 between the loading measurements LM1, LM2 is compared to the respective limit value ΔLM_{12LIMIT} for determining whether the respective pressure release valve has operated correctly for releasing the pressure on the respective side of the lifting cylinder 4. If the pressure release valve operates correctly, no pressure prevails in the lifting cylinder 4 so that no extra loading is applied by the dump box 3 to the body 2 of the mining vehicle 1 at a time when the dump box 3 should rest freely against the body 2 of the mining vehicle 1. The respective loading measurements are received and analysed by the control unit 7 for determining the state of the respective pressure release valve.

In the example embodiments above, the testing procedure is carried out only for one of the pressure release valves in the arrangement 5 for operating the lifting cylinder 4. However, typically, the functioning of both pressure release valves in the arrangement 5 should be verified. According to this example embodiment, the method comprises controlling, in interchangeable order, the hydraulic circuit to pressurize the lifting cylinder to change the position of the dump box upwards away from the body of the mining vehicle and downwards against the body of the mining vehicle. The method further comprises controlling the pressure release valve to open the hydraulic circuit for depressurizing the lifting cylinder in response to control the lifting cylinder to change the position of the dump box relative to the body. The loadings applied by the dump box to the body of the mining vehicle are measured both in response to control the hydraulic circuit to change the position of the dump box and in response to control the pressure release valve to open the hydraulic circuit for depressurizing the lifting cylinder. Differences between the respective loading measurements measured in response to control the hydraulic circuit to change the position of the dump box and in response to control the pressure release valves to open the hydraulic circuit for depressurizing the lifting cylinder are determined. The determined differences are compared to respective limit values for determining the states of the pressure release valves of the lifting cylinder.

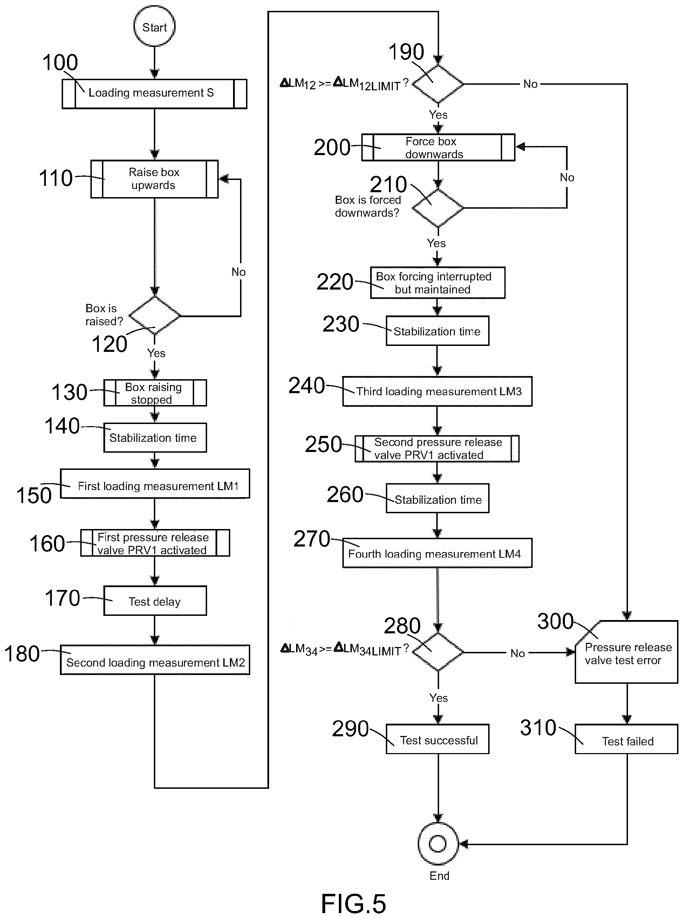

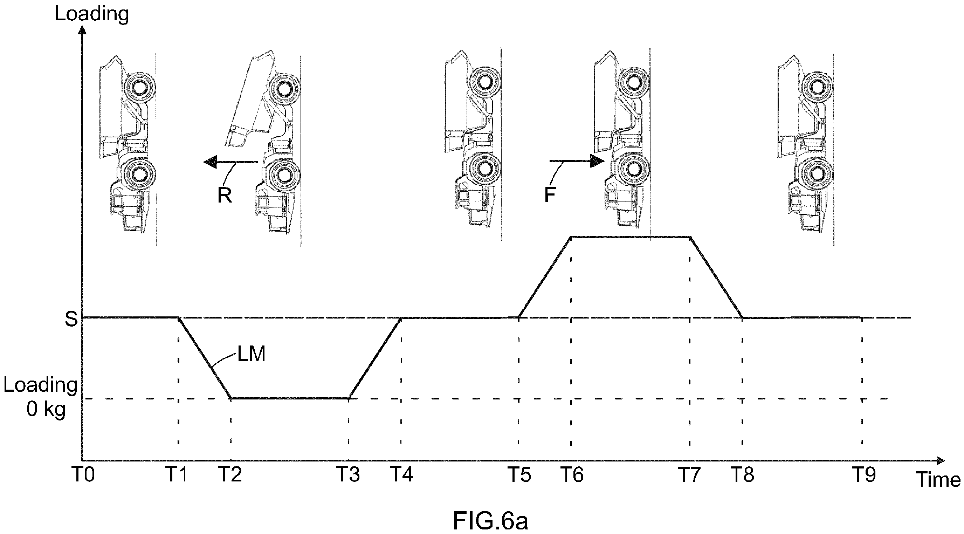

An example embodiment of the testing procedure like that is exemplified in view of Figures 2, 5, 6a, 6b and 7. Figures 5, 6a and 6b show schematically a method for monitoring a condition of pressure release valves in a mining vehicle. Figure 7 shows schematically and partially a system for carrying out the method of Figures 5, 6a and 6b. In a flow chart of Figure 5 the dump box 3 is called a box.

At the beginning of the method of Figure 5, i.e., at a stage 100 of the method of Figure 5, a loading applied by the dump box 3 to the body 2 of the mining vehicle 1 is measured and denoted with the reference sign S. This loading S is intended to indicate the loading which is applied by the dump box 3 to the body 2 of the mining vehicle 1 when the dump box 3 should rest freely against the body 2 of the mining vehicle 1. A level of loading corresponding to the loading S is shown schematically in Figures 6a and 6b with an upper horizontal broken line denoted with the reference sing "S". A loading measured by the loading measurement element 8 is shown in Figures 6a and 6b schematically with a continuous line indicated with the reference sign LM. Figure 6a discloses a theoretical loading curve to be provided by the loading measurement element 8 in response to the dump box 3 applying loading to the body 2 of the mining vehicle 1. Figure 6b discloses a loading measurement that was provided by a loading measurement element during a practical experiment in response to the dump box 3 having applied loading to the body 2 of the mining vehicle 1. Referring to Figures 6a and 6b, the stage 100 corresponds to the period between the time instants T0 and T1.

At a stage 110 the control unit 7 controls the hydraulic circuit 6 of the lifting cylinder 4 to pressurize the lifting cylinder 4 on the piston side thereof for raising the dump box 3 upwards away from the body 2 of the mining vehicle 1. Referring to Figures 6a and 6b, the stage 110 begins at time instant T1 and it is exemplified in Figure 6a also with the arrow R.

At a stage 120, it may be verified, as carried out by the control unit 7, that the dump box 3 has started to raise upwards away from the body 2 of the mining vehicle 1. This can be verified by at least one of the following ways. According to a first way, the control unit 7 may receive one or more loading measurements from the loading measurement element 8 after time instant T1 between time instants T1 and T2 shown in Figures 6a and 6b and compare these one or more loading measurements to the loading S measured before starting to raise the dump box 3 upwards away from the body 2 of the mining vehicle 1. If the one or more loading measurements received between time instants T1 and T2 are smaller than the loading S measured before the time instant T1, the dump box 3 has started to raise upwards away from the body 2 of the mining vehicle 1. According to a second way, the control unit 7 may receive one or more position measurements, indicating the position of the dump box 3 relative to the body 2 of the mining vehicle 1, from a position measurement element 9 between time instants T1 and T2. The control unit 7 may then compare these one or more position measurements to a respective limit value for verifying that the dump box 3 has started to raise upwards away from the body 2 of the mining vehicle 1. The measurement of the position of the dump box 3 and the position measurement element 9 are discussed in more detail below.

If it is verified that the dump box 3 is not raising, the method returns to the stage 110 discussed above. If it is verified that the dump box 3 is raising, the testing procedure is continued further.

At a stage 130, the raising of the dump box 3 is stopped by respective control action(s) subjected to the hydraulic circuit 6 by the control unit 7. Referring to Figures 6a and 6b, the stage 130 corresponds to time instant T2.

At a stage 140, the raising of the dump box 3 has been stopped. After that it is waited for some time, for example about 10 to 20 seconds, before the first loading measurement LM1 is received by the control unit 7. The first loading measurement LM1 represents the loading applied by the dump box 3 to the body 2 of the mining vehicle 1 after the dump box 3 has been raised upwards away from the body 2 of the mining vehicle 1. The waiting period is called a stabilization time ST, during which a possible swaying of the dump box 3 is waited to stop. Referring to Figures 6a and 6b, this stabilization time ST starts at time instant T2.

At a stage 150, the first loading measurement LM1 is received by the control unit 7 in response to the dump box 3 having been raised upwards away from the body 2 of the mining vehicle 1. As said above, the first loading measurement LM1 represents the loading applied by the dump box 3 to the body 2 of the mining vehicle 1 after the dump box 3 has been raised upwards away from the body 2 of the mining vehicle 1. Referring to Figures 6a and 6b, the first loading measurement LM1 is measured at the period between the time instants T2 and T3 after the stabilization time ST of the stage 140 as discussed above has passed. In practice, at this stage 150 the first loading measurement LM1 should be substantially zero because the dump box 3 is tilted upwards, i.e., the dump box 3 does not rest freely on the body 2 of the mining vehicle 1 and does not therefore apply any loading to the loading measurement element 8. This level of loading corresponding to zero loading, or no loading is shown schematically in Figures 6a and 6b with a lower horizontal broken line denoted with the reference marking "Loading 0 kg". However, a minor measurement error may be present because of a possible minor inaccuracy in the operation of the loading measurement element 8.

At a stage 160, the first pressure release valve PRV1 is activated, i.e., controlled by the control unit 7, to open the hydraulic circuit 6 for depressurizing the lifting cylinder 4 on the piston side thereof. Because of that the pressure fluid remaining in the piston side of the lifting cylinder 4 should flow through the first pressure release valve PRV1 and through the first tank line TL1 into the tank T, allowing the dump box 3 to lower downwards back towards the body 2 of the mining vehicle 1. Referring to Figures 6a and 6b, the first pressure release valve PRV1 is controlled to open the hydraulic circuit 6 at time instant T3.

At a stage 170, the dump box 3 should move downwards for resting freely against the body 2 of the mining vehicle 1. In Figure 5 this stage is called a test delay and referring to Figures 6a and 6b, the stage 170 refers to the period between the time instants T3 and T4.

At a stage 180, the second loading measurement LM2 is received by the control unit 7 in response to control the first pressure release valve PRV1 to open the hydraulic circuit 6 for depressurizing the lifting cylinder 4. The second loading measurement LM2 represents the loading applied by the dump box 3 to the body 2 of the mining vehicle 1 after the dump box 3 should have returned downwards with an intention to again rest freely against the body 2 of the mining vehicle 1. Referring to Figures 6a and 6b, the second loading measurement LM2 is measured at the period between the time instants T4 and T5. No specific stabilization time should not be needed herein because supposedly the dump box 3 rests firmly against the body 2 of the mining vehicle 1. Therefore, at this stage the second loading measurement LM2 should be substantially the same as the loading S measured at the beginning of the testing procedure. However, a minor measurement error may be present because of a possible minor inaccuracy in the operation of the loading measurement element 8.

At stage 190, a first loading difference ΔLM₁₂ = LM2 - LM1 representing the difference between the first LM1 and second LM2 loading measurements is determined. The first loading difference ΔLM₁₂ is then compared to a first limit value ΔLM_{12LIMIT} set for determining the state of the first pressure release valve PRV1. If the first loading measurement value LM1 substantially corresponds to zero or no loading, and if the second loading measurement value LM2 substantially corresponds to the loading S measured at the beginning of the testing procedure, taking into account also possible measurement inaccuracies also in the setting of the respective limit value ΔLM_{12LIMIT}, the first loading difference ΔLM₁₂ will be equal or higher than the respective limit value ΔLM_{12LIMIT}. This indicates that the first pressure release valve PRV1 is functional, i.e., operates correctly, and the testing procedure may be continued. However, if the first loading difference ΔLM₁₂ is smaller than the respective limit value ΔLM_{12LIMIT}, it indicates that the first pressure release valve PRV1 does not operate correctly. This means that the first pressure release valve PRV1 does not allow the pressure fluid to flow out of the piston side of the lifting cylinder 4 either completely or in a certain time, thus unintentionally maintaining the pressure in the lifting cylinder 4 and causing needless stress to the body 2 of the mining vehicle 1. In response to the first pressure release valve PRV1 not operating correctly, the testing procedure may be interrupted by concluding that the first pressure release valve PRV1 does not operate correctly. This is shown by stages 300 and 310 in Figure 5.

If the testing procedure of Figure 5 has proved the first pressure release valve PRV1 to operate correctly, the testing procedure may be continued to a stage 200.

At a stage 200 the control unit 7 controls the hydraulic circuit 6 of the lifting cylinder 4 to pressurize the lifting cylinder 4 on the piston rod side thereof for forcing the dump box 3 downwards against the body 2 of the mining vehicle 1. This means that the dump box 3 does not any more rest freely against the body 2 of the mining vehicle 1, but that the dump box 3 is especially forced or pressed against the body 2 of the mining vehicle 1. Referring to Figures 6a and 6b, the stage 200 begins at time instant T5 and it is exemplified in Figure 6a also with the arrow F.

At a stage 210, it may be verified, as carried out by the control unit 7, that the dump box 3 has started to move downwards against the body of the mining vehicle 1 such that the dump box 3 is pressed downwards against the body 2 of the mining vehicle 1. This can be verified by receiving by the control unit 7 one or more loading measurements from the loading measurement element 8 after time instant T5 between the time instants T5 and T6 shown in Figures 6a and 6b and by further comparing these one or more loading measurements to the second loading measurement LM2 received earlier at the stage 180. If the one or more loading measurements received after the time instant T5 between the time instants T5 and T6 are higher than the second loading measurement LM2, the dump box 3 has started to be pressed downwards against the body 2 of the mining vehicle 1.

If it is verified that the dump box 3 is not pressed downwards against the body 2 of the mining vehicle 1, the method returns to the stage 200 discussed above. If it is verified that the dump box 3 is pressed downwards against the body 2 of the mining vehicle 1, the testing procedure is continued further.

At a stage 220, the forcing or pressing of the dump box 3 downwards against to the body 2 of the mining vehicle 1 is interrupted by respective control action(s) subjected to the hydraulic circuit 6 by the control unit 7. This means that the force pressing the dump box 3 against the body 2 of the mining vehicle 1 is not increased any more but that the achieved press force or press level is maintained. Referring to Figures 6a and 6b, the stage 220 corresponds to time instant T6.

At a stage 230, after the forcing or pressing of the dump box 3 downwards against to the body 2 of the mining vehicle 1 is interrupted such that the force pressing the dump box 3 to the body 2 of the mining vehicle 1 is not increased any more but that the achieved press force or press level is maintained, it is waited for some time, for example about 10 to 20 seconds, before the third loading measurement LM3 is measured. The third loading measurement LM3 represents the loading applied by the dump box 3 to the body 2 of the mining vehicle 1 when the dump box 3 is forced downwards against the body 2 of the mining vehicle 1. The waiting period is also herein called a stabilization time ST, during which a possible swaying of the dump box 3 relative to the body of the mining vehicle 1 is waited to stop. Referring to Figures 6a and 6b, this stabilization time ST starts at time instant T6.

At a stage 240, the third loading measurement LM3 is received by the control unit 7 in response to the dump box 3 having been forced downwards against the body 2 of the mining vehicle 1. The third loading measurement LM3 thus represents the loading applied by the dump box 3 to the body 2 of the mining vehicle 1 after the dump box 3 has become forced downwards against the body 2 of the mining vehicle 1. Referring to Figures 6a and 6b, the third loading measurement LM3 is measured at the period between the time instants T6 and T7 after the stabilization time of the stage 230 discussed above has passed. In practice, at this stage 240 the third loading measurement LM3 should be substantially higher than the second loading measurement LM2. Again, a minor measurement error may be present because of a possible minor inaccuracy in the operation of the loading measurement element 8.

At a stage 250, the second pressure release valve PRV2 is activated, i.e., controlled by the control unit 7, to open the hydraulic circuit 6 for depressurizing the lifting cylinder 4 on the piston rod side thereof. Because of that the pressure fluid remaining in the piston rod side of the lifting cylinder 4 should flow through the second pressure release valve PRV2 and through the second tank line TL2 into the tank T, allowing the dump box 3 to raise upwards such that it again rests freely against the body 2 of the mining vehicle 1. Referring to Figures 6a and 6b, the second pressure release valve PRV2 is controlled to open the hydraulic circuit 6 at time instant T7.

At a stage 260, the dump box 3 should have moved upwards, in response to control the second pressure release valve PRV2 to open the hydraulic circuit 6 for depressurizing the lifting cylinder, such that the dump box 3 again rests freely against the body 2 of the mining vehicle 1. Herein, again, it is waited for some time, for example about 10 to 20 seconds, before the fourth loading measurement LM4 is measured. The fourth loading measurement LM4 represents the loading applied by the dump box 3 to the body 2 of the mining vehicle 1 after the dump box 3 should have returned to rest freely against the body 2 of the mining vehicle 1. The waiting period is also herein called a stabilization time ST, during which a possible swaying of the dump box 3 relative to the body 2 of the mining vehicle 1 is waited to stop. Referring to Figures 6a and 6b, this stabilization time ST starts at time instant T8.

At a stage 270, the fourth loading measurement LM4 is received by the control unit 7 in response to control the second pressure release valve PRV2 to open the hydraulic circuit 6 for depressurizing the lifting cylinder 4. The fourth loading measurement LM4 represents the loading applied by the dump box 3 to the body 2 of the mining vehicle 1 after the dump box 3 has returned upwards with an intention to again rest freely against the body 2 of the mining vehicle 1. Referring to Figures 6a and 6b, the fourth loading measurement LM4 is measured at the period between the time instants T8 and T9, after the stabilization time of the stage 260 discussed above has passed. Therefore, at this stage the fourth loading measurement LM4 should be substantially the same as the loading S measured at the beginning of the testing procedure or the second loading measurement LM2 measured at the stage 180. However, a minor measurement error may be present because of a possible minor inaccuracy in the operation of the loading measurement element 8.

At a stage 280, a second loading difference ΔLM₃₄ = LM4 - LM3 representing the difference between the third LM3 and second LM4 loading measurements is determined. The second loading difference ΔLM₃₄ and compared to a second limit value ΔLM_{34LIMIT} set for determining the state of the second pressure release valve PRV2. If the third loading measurement value LM3 is substantially higher than the fourth loading measurement LM4, which fourth loading measurement LM4 should substantially correspond to the loading S measured at the beginning of the testing procedure or the second loading measurement LM2 measured at the stage 180, taking into account also possible measurement inaccuracies also in the setting of the respective limit value ΔLM_{34LIMIT}, an absolute value of the second loading difference ΔLM₃₄ will be equal or higher than the respective limit value ΔLM_{34LIMIT}. This indicates that the second pressure release valve PRV2 is functional, i.e., operates correctly. The testing procedure may then be concluded by stating that also the second pressure release valve PRV2 operates correctly, and therefore both pressure release valves PRV1, PRV2 operate correctly. This is shown by a stage 290 in Figure 5. However, if the absolute value of the second loading difference ΔLM₃₄ is smaller than the respective limit value ΔLM_{34LIMIT}, it indicates that the second pressure release valve PRV2 does not operate correctly. That means that the second pressure release valve PRV2 does not allow the pressure fluid to flow out of the piston rod side of the lifting cylinder 4 either completely or in a certain time, thus unintentionally maintaining the pressure in the lifting cylinder and causing needless stress to the body 2 of the mining vehicle 1. In response to the second pressure release valve PRV2 not operating correctly, the testing procedure may be concluded by stating that the second pressure release valve PRV2 does not operate correctly. This is shown by stages 300 and 310 in Figure 5.

According to an example embodiment, which is already briefly discussed above and shown in Figure 5, the loading applied by the dump box 3 to the body 2 of the mining vehicle 1 is preferably measured after a stabilization time ST in response to control the hydraulic circuit to pressurize the lifting cylinder 4 for changing the position of the dump box 3 relative to the body 2. Furthermore, the loading applied by the dump box 3 to the body 2 of the mining vehicle 1 is also preferably measured after a stabilization time ST in response to control the pressure release valve to open the hydraulic circuit for depressurizing the lifting cylinder. According to this example embodiment, the control unit 7 is configured to receive, after a respective stabilization time, the measurements of the loading applied by the dump box 3 to the body 2 of the mining vehicle 1 both in response to control the hydraulic circuit to pressurize the lifting cylinder 4 for changing the position of the dump box 3 relative to the body 2 and in response to control the pressure release valve to open the hydraulic circuit for depressurizing the lifting cylinder. An effect of the application of the stabilization time ST, that is shown schematically also in Figures 4 and 7, is to verify that the loading measurements applied to determine the state of the respective pressure release valve PRV1, PRV2 are measured at such an operating situation, wherein the dump box 3 no more moves relative to the body 2 of the mining vehicle 1. The stabilization time ST may be set freely for both phases of operating the dump box 3 to determine the state of the respective pressure release valve PRV1, PRV2, or the stabilization time ST may be a fixed value, that may, however, be a different value for each phase of operating the dump box 3.

According to an example embodiment, which is also already briefly discussed in connection of Figure 5 above, a position of the dump box 3 is determined for verifying applicable position of the dump box 3 relative to the body 2 before measuring the loading applied by the dump box 3 to the body 2 of the mining vehicle 1. For this purpose, the system comprises at least one position measurement element 9 for measuring the position of the dump box 3 relative to the body 2. The control unit 7 is then configured to receive a respective position measurement PM, as shown schematically in Figures 4 and 7. The position measurement PM representing the position of the dump box 3 relative to the body 2 of the mining vehicle 1 may be used for verifying applicable position of the dump box 3 relative to the body 2 before receiving the loading applied by the dump box 3 to the body 2 of the mining vehicle 1. An effect of measuring the position of the dump box 3 relative to the body 2 of the mining vehicle 1 is to verify that the loading measurements to be applied for determining the state of the respective pressure release valve PRV1, PRV2 are measured at such an operating situation, wherein the dump box 3 has actually changed its position relative to the body 2 of the mining vehicle 1, i.e., turn relative to the body 2 of the mining vehicle 1, The said operating situation thus refers to situations, wherein the dump box 3 has been raised away from the body 2 of the mining vehicle 1, or wherein the dump box 3 is especially pulled, i.e., forced, against the body 2 of the mining vehicle 1, or wherein the dump box 3 is again resting freely against to the body 2 of the mining vehicle 1. The turning angle needed to verify that the dump box 3 has changed its position relative to the body 2 of the mining vehicle 1 is quite small, such as in a range of 0.5. to 3 degrees, for instance. The position measurement element 9, which is shown schematically in Figures 2, 4 and 7, may for example be an angle sensor or a limit switch, that is installed in the mining vehicle 1 at the swivelling axis SA of the dump box 3.

According to an example embodiment, a weight W of load in the dump box 3 is determined and the testing procedure for determining the state of the at least one pressure release valve is initiated automatically in response to the determined weight of load indicating no substantial load in the dump box 3 of the mining vehicle 1. According to this example embodiment, the system comprises an arrangement for determining a weight W of load in the dump box 3 of the mining vehicle 1. The control unit 7 is configured to determine the weight W of load in the dump box 3 of the mining vehicle 1 and to carry out automatically the operations to determine the state of the at least one pressure release valve in response to the determined weight W of load indicating no substantial load in the dump box 3 of the mining vehicle 1. The arrangement for determining the weight W of load in the dump box 3 of the mining vehicle 1, denoted with the reference sign 10, is shown schematically in Figures 2, 4 and 7. With the determination of the weight W of load in the dump box 3 it can be verified, that there is no substantial load in the dump box 3 before tilting the dump box 3 upwards.

The testing procedure for determining the state of the at least one pressure release valve may, however, be initiated even if there is a load in the dump box 3. In that case, the determined weight of load may be used to calibrate the measurement of the loading measurement element 8 such that the effect of the weight of the load in the dump box 3 is not considered in the loading measurements provided by the loading measurement element 8. In case of a load being present in the dump box 3 of the mining vehicle 1, the position measurement PM representing the position of the dump box 3 relative to the body 2 of the mining vehicle 1 may also be applied to prevent the dump box 3 to be tilted too much upwards so that the load could move in the dump box 3.

According to an example embodiment, the testing procedure for determining the state of the at least one pressure release valve may be initiated by an operator of the mining vehicle 1. The mining vehicle 1 may then be stationary or moving slowly. The operator of the mining vehicle 1 may initiate the testing procedure after unloading the load having been carried out by the mining vehicle 1. The testing procedure for determining the state of the at least one pressure release valve is preferably carried out outdoors, but the position measurement PM representing the position of the dump box 3 relative to the body 2 of the mining vehicle 1 may also be applied for preventing the dump box 3 to be tilted too much upwards in areas with a limited space above the mining vehicle 1. When the testing procedure is initiated by the operator, the control unit 7 may guide the operator through a user interface of the mining vehicle to take specific action to carry out the testing procedure, such as to guide the operator when to move the dump box 3 upwards or downwards and when to control the pressure in the lifting cylinder to be released so that the applicable loading measurements are receivable by the control unit 7.

When the testing procedure for determining the state of the at least one pressure release valve is initiated by the operator of the mining vehicle 1, the testing procedure may be carried out for example once in a shift.

According to an example embodiment, the testing procedure for determining the state of the at least one pressure release valve may be initiated automatically by the control unit 7, what is preferable especially in case of autonomously operating mining vehicles 1. The mining vehicle 1 may then be stationary or moving slowly. The position measurement PM representing the position of the dump box 3 relative to the body 2 of the mining vehicle 1 may be applied for preventing the dump box 3 to be tilted too much upwards in case of the mining vehicle 1 being in an area with a limited space above the mining vehicle 1.

When the testing procedure for determining the state of the at least one pressure release valve is initiated automatically, the testing procedure may be repeated at intervals, which may be either regular or random intervals.

The disclosed method and system provide a simple and easily implemented solution for monitoring the condition of the mining vehicle as far it considers a correct functioning of the at least one pressure release valve for releasing the pressure in the at least one lifting cylinder of the dump box. A possible malfunction of the pressure release valve may then be detected easily, which possible malfunction could cause at least some pressure to prevail in the lifting cylinder at least for too long. The pressure prevailing in the lifting cylinder can cause extra stress subjected to the body of the mining vehicle also at the times when the dump box should rest freely against the body of the mining vehicle.

In case of the mining vehicle already comprising an arrangement for determining a weight of load in the dump box of the mining vehicle there is no need to install any extra equipment in the mining vehicle because the arrangement for determining the weight of load in the dump box of the mining vehicle already comprises the load measurement element for measuring the loading applied by the dump box to the body of the mining vehicle. In case of the mining vehicle not comprising any arrangement for determining the weight of load in the dump box of the mining vehicle, only, in its minimum, the load measurement element for measuring the loading applied by the dump box to the body of the mining vehicle should be installed in the mining vehicle at an appropriate position.

The testing procedure for determining the correct functioning of the at least pressure release valve also takes only few minutes, just as two or three minutes, for example. The testing procedure, which may be initiated either by the operator of the mining vehicle or automatically by the control unit, may thus be carried out at a right moment during a normal operation of the mining vehicle without any maintenance personnel and equipment external to the mining vehicle.

It will be obvious to a person skilled in the art that, as the technology advances, the inventive concept can be implemented in various ways. The present application and its example embodiments are not limited to the examples described above but may vary within the scope of the claims.

## Claims

1. A method for condition monitoring of a mining vehicle, which mining vehicle comprises a body, a dump box, at least one dump box lifting cylinder for operating the dump box, a hydraulic circuit for operating the lifting cylinder, and a pressure release valve for the hydraulic circuit for depressurizing the lifting cylinder, and which method comprises
controlling a hydraulic circuit to pressurize the lifting cylinder for changing a position of the dump box relative to the body,
controlling a respective pressure release valve to open the hydraulic circuit for depressurizing the lifting cylinder,
measuring a loading applied by the dump box to the body of the mining vehicle both in response to changing the position of the dump box relative to the body of the mining vehicle and in response to control the pressure release valve to open the hydraulic circuit for depressurizing the lifting cylinder, and
determining, based on the said loading measurements, a state of the pressure release valve in response to control the pressure release valve to open the hydraulic circuit for depressurizing the lifting cylinder.

2. The method as claimed in claim 1, **characterized by** measuring a first loading measurement representing a loading applied by the dump box to the body of the mining vehicle in response to changing the position of the dump box relative to the body of the mining vehicle,
measuring a second loading measurement representing a loading applied by the dump box to the body of the mining vehicle in response to control the pressure release valve to open the hydraulic circuit for depressurizing the lifting cylinder,
determining a difference between the first and second loading measurements, and
comparing the difference to a limit value for determining the state of the pressure release valve.

3. The method as claimed in claim 1 or 2, **characterized by** controlling, in interchangeable order, the hydraulic circuit to pressurize the lifting cylinder to change the position of the dump box upwards away from the body of the mining vehicle and downwards against the body of the mining vehicle,
controlling the pressure release valve to open the hydraulic circuit for depressurizing the lifting cylinder in response to control the lifting cylinder to change the position of the dump box relative to the body,
measuring the loadings applied by the dump box to the body of the mining vehicle both in response to control the hydraulic circuit to change the position of the dump box and in response to control the pressure release valve to open the hydraulic circuit for depressurizing the lifting cylinder,
determining differences between the respective loading measurements measured in response to control the hydraulic circuit to change the position of the dump box and in response to control the pressure release valves to open the hydraulic circuit for depressurizing the lifting cylinder, and
comparing the determined differences to respective limit values for determining the states of the pressure release valves of the lifting cylinder.

4. The method as claimed in any one of the preceding claims, **characterized by** controlling a hydraulic circuit to pressurize the lifting cylinder for raising the dump box upwards away from the body of the mining vehicle,
measuring a first loading measurement representing the loading applied by the dump box to the body of the mining vehicle in response to the dump box having been raised upwards away from the body of the mining vehicle,
controlling the respective pressure release valve to open the hydraulic circuit for depressurizing the lifting cylinder for allowing the dump box to move downwards for resting freely against the body of the mining vehicle,
measuring a second loading measurement representing the loading applied by the dump box to the body of the mining vehicle in response to control the pressure release valve to open the hydraulic circuit for depressurizing the lifting cylinder,
determining a first loading difference representing the difference between the first and second loading measurements,
comparing the first loading difference to a first limit value for determining the state of the pressure release valve in the respective hydraulic circuit,
controlling a hydraulic circuit to pressurize the lifting cylinder for forcing the dump box downwards against the body of the mining vehicle,
measuring a third loading measurement representing the loading applied by the dump box to the body of the mining vehicle in response to the dump box having been forced downwards against the body of the mining vehicle,
controlling the respective pressure release valve to open the hydraulic circuit for depressurizing the lifting cylinder for allowing the dump box to move upwards for resting freely against the body of the mining vehicle,
measuring a fourth loading measurement representing the loading applied by the dump box to the body of the mining vehicle in response to control the pressure release valve to open the hydraulic circuit for depressurizing the lifting cylinder,
determining a second loading difference representing the difference between the third and fourth loading measurements, and
comparing the second loading difference to a second limit value for determining the state of the pressure release valve in the respective hydraulic circuit.

5. The method as claimed in any one of the preceding claims, **characterized by** measuring, after a stabilization time, the loading applied by the dump box to the body of the mining vehicle in response to control the hydraulic circuit to pressurize the lifting cylinder for changing the position of the dump box relative to the body, and measuring, after a stabilization time, the loading applied by the dump box to the body of the mining vehicle in response to control the pressure release valve to open the hydraulic circuit for depressurizing the lifting cylinder.

6. The method as claimed in any one of the preceding claims, **characterized by** determining a position of the dump box for verifying applicable position of the dump box relative to the body before measuring the loading applied by the dump box to the body of the mining vehicle.

7. The method as claimed in any one of the preceding claims, **characterized by** determining a weight of load in the dump box of the mining vehicle, and
initiating the method as claimed in any one of the preceding claims automatically in response to the determined weight of load indicating no substantial load in the dump box of the mining vehicle.

8. The method as claimed in any one of the preceding claims, **characterized by** repeating the method as claimed in any one of the preceding claims automatically at regular or random intervals.

9. A system for condition monitoring of a mining vehicle, which mining vehicle comprises a body, a dump box, at least one dump box lifting cylinder for operating the dump box, a hydraulic circuit for operating the lifting cylinder, and a pressure release valve for the hydraulic circuit for depressurizing the lifting cylinder, and which system comprises
at least one loading measurement element for measuring a loading applied by the dump box to the body of the mining vehicle, and
a control unit configured to receive loading measurements from the at least one loading measurement element and to control the operation of the lifting cylinder for operating the dump box, wherein the control unit is configured
to control a hydraulic circuit to pressurize the lifting cylinder for changing a position of the dump box relative to the body,
to control a respective pressure release valve to open the hydraulic circuit for depressurizing the lifting cylinder,
to receive loading measurements of a loading applied by the dump box to the body of the mining vehicle both in response to changing the position of the dump box relative to the body of the mining vehicle and in response to control the pressure release valve to open the hydraulic circuit for depressurizing the lifting cylinder, and
to determine, based on the said loading measurements, a state of the pressure release valve in response to control the pressure release valve to open the hydraulic circuit for depressurizing the lifting cylinder.

10. A system as claimed in claim 9, **characterized in that** the control unit is configured to
receive a first loading measurement representing a loading applied by the dump box to the body of the mining vehicle in response to changing the position of the dump box relative to the body,
to receive a second loading measurement representing a loading applied by the dump box to the body of the mining vehicle in response to control the pressure release valve to open the hydraulic circuit for depressurizing the lifting cylinder,
to determine a difference between the first and second loading measurements, and
to compare the difference to a limit value for determining the state of the pressure release valve.

11. A system as claimed in claim 9 or 10, **characterized in that** the control unit is configured to control, in interchangeable order, the hydraulic circuit to pressurize the lifting cylinder to change the position of the dump box upwards away from the body of the mining vehicle and downwards against the body of the mining vehicle,
to control the pressure release valve to open the hydraulic circuit for depressurizing the lifting cylinder in response to control the lifting cylinder to change the position of the dump box relative to the body,
to receive loading measurements of the loading applied by the dump box to the body of the mining vehicle both in response to control the hydraulic circuit to change the position of the dump box and in response to control the pressure release valve to open the hydraulic circuit for depressurizing the lifting cylinder,
to determine differences between the respective loading measurements measured in response to control the hydraulic circuit to change the position of the dump box and in response to control the pressure release valves to open the hydraulic circuit for depressurizing the lifting cylinder, and
to compare the determined differences to respective limit values for determining the states of the pressure release valves of the lifting cylinder.

12. A system as claimed in any one of claims 9 to 11, **characterized in that** the control unit is configured
to control a hydraulic circuit to pressurize the lifting cylinder for raising the dump box upwards away from the body of the mining vehicle,
to receive a first loading measurement representing the loading applied by the dump box to the body of the mining vehicle in response to the dump box having been raised upwards away from the body of the mining vehicle,
to control the respective pressure release valve to open the hydraulic circuit for depressurizing the lifting cylinder for allowing the dump box to move downwards for resting freely against the body of the mining vehicle,
to receive a second loading measurement representing the loading applied by the dump box to the body of the mining vehicle in response to control the pressure release valve to open the hydraulic circuit for depressurizing the lifting cylinder,
to determine a first loading difference representing the difference between the first and second loading measurements,
to compare the first loading difference to a first limit value for determining the state of the pressure release valve in the respective hydraulic circuit,
to control a hydraulic circuit to pressurize the lifting cylinder for forcing the dump box downwards against the body of the mining vehicle,
to receive a third loading measurement representing the loading applied by the dump box to the body of the mining vehicle in response to the dump box having been forced downwards against the body of the mining vehicle,
to control the respective pressure release valve to open the hydraulic circuit for depressurizing the lifting cylinder for allowing the dump box to move upwards for resting freely against the body of the mining vehicle,
to receive a fourth loading measurement representing the loading applied by the dump box to the body of the mining vehicle in response to control the pressure release valve to open the hydraulic circuit for depressurizing the lifting cylinder,
to determine a second loading difference representing the difference between the third and fourth loading measurements, and
to compare the second loading difference to a second limit value for determining the state of the pressure release valve in the respective hydraulic circuit.

13. A system as claimed in any one of claims 9 to 12, **characterized in that** the control unit is configured to receive, after a respective stabilization time, the measurements of the loading applied by the dump box to the body of the mining vehicle both in response to control the hydraulic circuit to pressurize the lifting cylinder for changing the position of the dump box relative to the body and in response to control the pressure release valve to open the hydraulic circuit for depressurizing the lifting cylinder.

14. A system as claimed in any one of claims 9 to 13, **characterized in that** the system comprises at least one position measurement element for measuring the position of the dump box relative to the body, and that
the control unit is configured to receive a position measurement representing the position of the dump box relative to the body for verifying applicable position of the dump box relative to the body before receiving the loading applied by the dump box to the body of the mining vehicle.

15. A system as claimed in any one of claims 9 to 14, **characterized in that** the system comprises an arrangement for determining a weight of load in the dump box of the mining vehicle, and that the control unit is configured
to determine a weight of load in the dump box of the mining vehicle, and
to carry out automatically the operations to determine the state of the pressure release valve in response to the determined weight of load indicating no substantial load in the dump box of the mining vehicle.
